# EUROPEAN PATENT APPLICATION

(11) **EP 3 667 795 A1**
(43) Date of publication of application: **17.06.2020**
(21) Application number: 18843598.6
(22) Date of filing: 31.05.2018
(51) Int. Cl.: H01M 10/04, H01M 10/30

(54) **FLOW BATTERY**

(30) Priority: 10.08.2017 JP 2017155932
(71) Applicant: KYOCERA Corporation, Kyoto 612-8501 (JP)
(72) Inventor: ONO, Tomoyuki, Kyoto-shi Kyoto 612-8501 (JP)
(74) Representative: Viering, Jentschura & Partner mbB Patent- und Rechtsanwälte
(86) International application number: PCT/JP2018/021073
(87) International publication number: WO 2019/031033

(57) **Abstract**

A flow battery according to embodiments includes a cathode 2, anodes 3a, 3b, a reaction chamber 10, an electrolytic solution 5, a manifold 20, a plurality of first supply holes 13a, 13b, and a gas supply part 11. The reaction chamber 10 houses the cathode 2 and the anodes 3a, 3b. The electrolytic solution 5 is housed inside the reaction chamber 10 and contacts the cathode 2 and the anodes 3a, 3b. The manifold 20 is arranged under the reaction chamber 10. The plurality of first supply holes 13a, 13b connect the reaction chamber 10 and the manifold 20. The gas supply part 11 supplies a gas to the manifold 20. When the manifold 20 is filled with the electrolytic solution 5, the cathode 2 and the anodes 3a, 3b are not exposed to an outside of the electrolytic solution 5, and when the manifold 20 is filled with a gas, a gas layer 7 that is not filled with the electrolytic solution 5 exists in the reaction chamber 10.

## Description

### Field

Disclosed embodiments relate to a flow battery.

### Background

A flow battery that circulates an electrolytic solution that contains tetrahydroxyzincate ion ([Zn(OH)₄]²⁻) between a cathode and an anode has been known conventionally (see, for example, Non-Patent Literature 1).

### Citation List

### Non-Patent Literature

Non-Patent Literature 1: Y. Ito. et al.: Zinc morphology in zinc-nickel flow assisted batteries and impact on performance, journal of Power Sources, Vol. 196, pp. 2340-2345, 2011

### Summary

A flow battery according to embodiments includes a cathode, an anode, a reaction chamber, an electrolytic solution, a manifold, a plurality of first supply holes, and a gas supply part. The reaction chamber houses the cathode and the anode. The electrolytic solution is housed inside the reaction chamber and contacts the cathode and the anode. The manifold is arranged under the reaction chamber. The plurality of first supply holes connect the reaction chamber and the manifold. The gas supply part supplies a gas to the manifold. When the electrolytic solution that is housed in the reaction chamber moves to the manifold so that the manifold is filled with the electrolytic solution, the cathode and the anode are not exposed to an outside of the electrolytic solution, and when the manifold is filled with a gas, a gas layer that is not filled with the electrolytic solution exists in the reaction chamber.

### Brief Description of Drawings

FIG. 1A is a diagram illustrating an outline of a flow battery according to embodiments.
FIG. 1B is a diagram illustrating an outline of a case that is included in a flow battery according to embodiments.
FIG. 1C is a diagram of a plan view of a reaction chamber of a flow battery according to embodiments.
FIG. 2 is a diagram explaining an example of connection between electrodes in a flow battery according to embodiments.
FIG. 3 is a diagram of a plan view of a reaction chamber of a flow battery according to Modification 1 of embodiments.
FIG. 4 is a diagram illustrating an outline of a support frame that is included in a flow battery according to Modification 2 of embodiments.
FIG. 5A is a diagram illustrating an outline of a flow battery according to Modification 2 of embodiments.
FIG. 5B is a diagram illustrating an outline of a reaction chamber that is included in a flow battery according to Modification 2 of embodiments.
FIG. 5C is a diagram explaining a flow of an electrolytic solution in a flow battery according to Modification 2 of embodiments.
FIG. 5D is a diagram explaining an example of connection between electrodes of a flow battery according to Modification 2 of embodiments.
FIG. 6 is a diagram illustrating an outline of a manifold that is included in a flow battery according to Modification 2 of embodiments.
FIG. 7 is a diagram illustrating an outline of a manifold that is included in a flow battery according to Modification 2 of embodiments.
FIG. 8 is a diagram illustrating an outline of a reaction chamber that is included in a flow battery according to Modification 3 of embodiments.
FIG. 9 is a diagram illustrating an outline of a reaction chamber that is included in a flow battery according to Modification 3 of embodiments.
FIG. 10A is a diagram illustrating an outline of an anode that is included in a flow battery according to Modification 4 of embodiments.
FIG. 10B is a diagram illustrating an outline of an anode that is included in a flow battery according to Modification 4 of embodiments.
FIG. 11 is a diagram illustrating an outline of an anode that is included in a flow battery according to Modification 5 of embodiments.
FIG. 12A is a diagram illustrating an outline of an anode that is included in a flow battery according to Modification 6 of embodiments.
FIG. 12B is a diagram illustrating an outline of an anode that is included in a flow battery according to Modification 6 of embodiments.
FIG. 13 is a diagram illustrating an outline of an anode that is included in a flow battery according to Modification 7 of embodiments.
FIG. 14A is a diagram illustrating an outline of a reaction chamber that is included in a flow battery according to Modification 8 of embodiments.
FIG. 14B is a diagram illustrating an outline of an anode that is included in a flow battery according to Modification 8 of embodiments.

### Description of Embodiments

Hereinafter, embodiments of a flow battery as disclosed in the present application will be explained in detail with reference to the accompanying drawings. Additionally, this invention is not limited by embodiments as illustrated below.

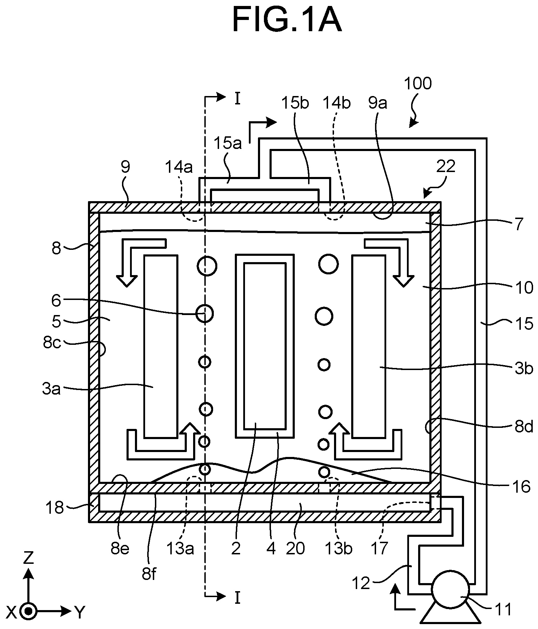

FIG. 1A is a diagram illustrating an outline of a flow battery according to embodiments. A flow battery 100 as illustrated in FIG. 1A includes a cathode 2 as a cathode plate, anodes 3a, 3b as anode plates, a diaphragm 4, an electrolytic solution 5, a powder 16, a reaction chamber 10, a gas supply part 11 as a flow device, a supply flow channel 12, a second supply hole 17, a manifold 20, first supply holes 13a, 13b, recovery ports 14a, 14b, and a recovery flow channel 15. Additionally, a cathode plate(s) and an anode plate(s) may collectively be referred to as electrode plates.

Additionally, for the sake of clarity of an explanation, FIG. 1A illustrates a 3-dimensional orthogonal coordinate system that includes a Z-axis where a vertically upward direction is a positive direction and a vertically downward direction is a negative direction. Such an orthogonal coordinate system may also be illustrated in another drawing that is used for an explanation as described later.

Electrode plates are sequentially aligned in a direction of a Y-axis in order of the anode 3a, the cathode 2, and the anode 3b. A direction where electrode plates are aligned therein may be referred to as a first direction.

The cathode 2 is housed in the reaction chamber 10. The cathode 2 is an electrically conductive member that contains, for example, a nickel compound, a manganese compound, or a cobalt compound as a cathode active material. For a nickel compound, it is possible to use, for example, nickel oxyhydroxide, nickel hydroxide, a cobalt-containing nickel hydroxide, or the like. For a manganese compound, it is possible to use, for example, manganese dioxide or the like. For a cobalt compound, it is possible to use, for example, cobalt hydroxide, cobalt oxyhydroxide, or the like. Furthermore, the cathode 2 may include graphite, carbon black, an electrically conductive resin, or the like. From a viewpoint of an oxidation-reduction potential where the electrolytic solution 5 is decomposed thereat, the cathode 2 may contain a nickel compound. Furthermore, the cathode 2 may be a nickel metal, a cobalt metal, or a manganese metal, or an alloy thereof.

The anodes 3a, 3b are housed in the reaction chamber 10. The anodes 3a, 3b include an anode active material as metallic zinc or a zinc compound. For the anodes 3a, 3b, it is possible to use, for example, a metal plate of a stainless steel, copper, or the like, or a stainless-steel or copper plate with a surface that is plating-processed with nickel, tin, or zinc. Furthermore, a plating-processed surface with an oxidized part may be used as the anodes 3a, 3b.

The diaphragm 4 covers the cathode 2. The diaphragm 4 has a hydroxide ion conductivity and conducts a hydroxide ion that is involved in an electrode reaction. Furthermore, the diaphragm 4 may be configured to be dense in such a manner that metallic zinc does not pass therethrough. Thereby, it is possible to further reduce a problem in that a grown dendrite penetrates through the diaphragm 4 to cause conduction between the cathode 2 and the anodes 3a, 3b. Herein, "dense" refers to having a relative density that is greater than or equal to 90%, more preferably greater than or equal to 92%, and further preferably greater than or equal to 95%, that is calculated by an Archimedes method. Furthermore, a thickness of the diaphragm 4 is preferably 10 µm to 1000 µm, and more preferably 100 µm to 500 µm. However, a relative density and a thickness of the diaphragm 4 are not limited to those as described above as long as it is possible to reduce penetration of a dendrite.

The diaphragm 4 may be configured to reduce, for example, passage of a metal ion such as [Zn(OH)₄]²⁻ with an ionic radius that is greater than that of a hydroxide ion while selectively passing such a hydroxide ion therethrough. Thus, as the diaphragm 4 reduces passage of a metal ion such as [Zn(OH)₄]²⁻, production of a dendrite inside the diaphragm 4 and near the cathode 2 is reduced, so that it is possible to further reduce conduction between the cathode 2 and the anodes 3a, 3b.

The diaphragm 4 may be formed by using, for example, a gel-like anion-conducting material that has a three-dimensional structure such as an organic hydrogel or a solid-polymer-type anion-conducting material. Herein, a solid-polymer-type anion-conducting material includes, for example, a polymer and one or more compounds that are selected from a group that is composed of an oxide, a hydroxide, a layered double hydroxide, a sulfate compound, and a phosphate compound that contains one or more elements that are selected from group 1 to group 17 of a periodic table.

The electrolytic solution 5 is housed inside the reaction chamber 10 so as to contact the cathode 2 and the anodes 3a, 3b. The electrolytic solution 5 is, for example, an alkaline aqueous solution that contains a zinc species. A zinc species in the electrolytic solution 5 is dissolved in the electrolytic solution 5 as [Zn(OH)₄]²⁻. For the electrolytic solution 5, it is possible to use, for example, an alkaline aqueous solution that includes K⁺ or OH⁻ and is saturated with zinc oxide. Herein, for an alkaline aqueous solution, it is possible to use, for example, 6.7 moldm⁻³ of an aqueous solution of potassium hydroxide. Furthermore, ZnO is added into 1 dm⁻³ of an aqueous solution of potassium hydroxide so as to cause saturation therewith, so that it is possible to prepare the electrolytic solution 5. Furthermore, ZnO is added into 1 dm⁻³ of an aqueous solution of potassium hydroxide at a rate of 0.5 mol and the powder 16 as described later is added thereto as needed, so that it is possible to prepare the electrolytic solution 5. Moreover, an alkali metal compound such as lithium hydroxide or sodium hydroxide may be added thereto, for a purpose of suppression of oxygen generation.

The powder 16 includes zinc. Specifically, the powder 16 is, for example, zinc oxide, zinc hydroxide, or the like that is processed into or produced as a powder form. The powder 16 is readily dissolved in an alkaline aqueous solution but is not dissolved or is precipitated in the electrolytic solution 5 that is saturated with a zinc species where a part thereof is mixed in the electrolytic solution 5 in a state where it is dispersed or suspended therein. In a case where the electrolytic solution 5 is left to stand for a long period of time, most of the powder 16 may be provided in a state where it is precipitated in the electrolytic solution 5, but if convection or the like is caused in the electrolytic solution5, a part of the powder 16 that is precipitated is provided in a state where it is dispersed or suspended in the electrolytic solution 5. That is, the powder 16 exists so as to be movable in the electrolytic solution 5. Additionally, "movable" herein does not represent that it is possible for the powder 16 to move only in a local space that is produced between surrounding or other powders 16 but represents that the powder 16 moves to another position in the electrolytic solution 5, so that the powder 16 is exposed to the electrolytic solution 5 other than that at an original position thereof. Moreover, a category of "movable" includes the powder 16 that is capable of moving to neighborhoods of both the anodes 3a, 3b and the cathode 2 or the powder 16 that is capable of moving to substantially any place in the electrolytic solution 5 that exists in a first case 8. As [Zn(OH)₄]²⁻ that is a zinc species that is dissolved in the electrolytic solution 5 is consumed, the powder 16 that is mixed in the electrolytic solution 5 is dissolved in such a manner that such a zinc species that is dissolved in the electrolytic solution 5 causes saturation thereof so that the powder 16 and the electrolytic solution 5 mutually maintain equilibrium states thereof.

The reaction chamber 10 and the manifold 20 are composed of a case 22. The case 22 includes a second case 18, the first case 8 that is arranged on the second case 18, and a top plate 9 that is arranged on the first case 8. The reaction chamber 10 is composed of the first case 8 and the top plate 9 that plugs an upper opening of the first case 8. A lower surface of the first case 8 is called a bottom surface 8e. The manifold 20 is composed of the second case 18 and an undersurface 8f of the first case 8 that plugs an upper opening of the second case 18. The reaction chamber 10 and the manifold 20 are connected by the first supply holes 13a, 13b that penetrate from the bottom surface 8e to the undersurface 8f.

The case 22 is composed of, for example, a resin material that has an alkali resistance and an insulation property, such as polystyrene, polypropylene, polyethylene terephthalate, or polytetrafluoroethylene. The first case 8, the top plate 9, and the second case 18 are preferably composed of mutually identical materials and may be composed of different materials.

The first case 8 houses the cathode 2, the anodes 3a, 3b, and the electrolytic solution 5. Furthermore, the first case 8 is provided with the first supply holes 13a, 13b that penetrate from the bottom surface 8e to the undersurface 8f. Furthermore, it has a space between an undersurface 9a of the top plate 9 and a liquid level of the electrolytic solution 5 so as to constitute a gas layer 7.

The second case 18 is provided with the second supply holes 17 that is connected to the supply flow channel 12.

The gas supply part 11 is, for example, a pump (a gas pump), a compressor, or a blower that is capable of transferring a gas and sends a gas that is recovered from the reaction chamber 10 via the recovery flow channel 15 to the first supply holes 13a, 13b via the supply flow channel 12, the second supply hole 17, and the manifold 20. The gas supply part 11 preferably has a high gas tightness in such a manner that an electric power generation performance of the flow battery 100 is prevented from being reduced by leaking a gas that is a source of generation of a gas bubble 6 or water vapor that originates from the electrolytic solution 5 to an outside thereof.

Each of the first supply holes 13a, 13b is provided on bottom of the reaction chamber 10. One of the first supply holes 13a, 13b is connected to the gas supply part 11 via the supply flow channel 12 and the other is opened to an inside of the reaction chamber 10 that houses the electrolytic solution 5. The first supply holes 13a, 13b supply a gas that is sent from the gas supply part 11 to the electrolytic solution 5 so as to generate a gas bubble 6. That is, the flow battery 100 according to embodiments includes a gas bubble generation device that includes the gas supply part 11 and the first supply holes 13a, 13b.

A gas bubble 6 is composed of, for example, a gas that is inert against the cathode 2, the anodes 3a, 3b, and the electrolytic solution 5. For such a gas, it is possible to provide, for example, nitrogen gas, helium gas, neon gas, argon gas, or the like. A gas bubble 6 of a gas that is inert against the electrolytic solution 5 is generated, so that it is possible to reduce denaturation of the electrolytic solution 5. Furthermore, for example, it is possible to reduce degradation of the electrolytic solution 5 that is an alkaline aqueous solution that contains a zinc species and maintain a high ion conductivity of the electrolytic solution 5. Additionally, a gas may be air. A gas bubble 6 that is generated by a gas that is supplied from the first supply hole 13a flows upward in the electrolytic solution 5 between the cathode 2 and the anode 3a, more specifically, between the diaphragm 4 and the anode 3a. Furthermore, a gas bubble 6 that is generated by a gas that is supplied from the first supply hole 13b flows upward in the electrolytic solution 5 between the cathode 2 and the anode 3b, more specifically, between the diaphragm 4 and the anode 3b. A gas that flows as a gas bubble 6 in the electrolytic solution 5 disappears at a liquid level of the electrolytic solution 5 and constitutes the gas layer 7 above the electrolytic solution 5 in the reaction chamber 10.

Each of the recovery ports 14a, 14b is provided above the reaction chamber 10. One of the recovery ports 14a, 14b is connected to the gas supply part 11 via the recovery flow channel 15 that includes branched flow channels 15a, 15b and the other is opened to the gas layer 7 inside the reaction chamber 10. The recovery ports 14a, 14b discharge a gas that is recovered from the reaction chamber 10 to an outside of the reaction chamber 10 and sends it to the gas supply part 11. Although the recovery ports 14a, 14b are arranged at positions to overlap with the first supply holes 13a, 13b, respectively, when viewing from a direction of a Z-axis, in an example as illustrated in FIG. 1A, this is not limiting and they may be arranged at any positions as long as they open so as to face the gas layer 7. Furthermore, although the recovery ports 14a, 14b are arranged at two positions in an example as illustrated in FIG. 1A, this is not limiting and a configuration may be provided in such a manner that one or three or more recovery ports are arranged.

Herein, an electrode reaction in the reaction chamber 10 will be explained by providing, as an example, a nickel-zinc flow battery where nickel hydroxide as a cathode active material is applied thereto. Reaction formulas at a cathode and an anode at a time of charging thereof are respectively provided as follows.

Cathode:

   Ni(OH)₂ + OH⁻ → NiOOH + H₂O + e⁻
Anode:

   [Zn(OH)₄]²⁻ + 2e⁻ → Zn + 4OH⁻

As is clear from a reaction formula, a concentration of [Zn(OH)₄]²⁻ in the electrolytic solution 5 near the anodes 3a, 3b is decreased as zinc is deposited on the anodes 3a, 3b by charging. Then, as the electrolytic solution 5 where a concentration of [Zn(OH)₄]²⁻ is decreased therein is retained near the anodes 3a, 3b, it is a factor for causing zinc that is deposited on the anodes 3a, 3b to grow as a dendrite. That is, as the electrolytic solution 5 where a concentration of [Zn(OH)₄]²⁻ is locally decreased by a charging reaction is caused to flow quickly without being retained near the anodes 3a, 3b, growth of a dendrite is reduced.

Accordingly, the flow battery 100 according to embodiments includes a flow device that supplies a gas from the first supply holes 13a, 13b of a gas bubble generation device that are opened to an inside of the reaction chamber 10 to the electrolytic solution 5 so as to generate a gas bubble 6. A gas bubble 6 flows so as to rise in the electrolytic solution 5 from a bottom to a top of the reaction chamber 10 between the anode 3a and the cathode 2 and between the cathode 2 and the anode 3b, respectively.

Furthermore, an upward liquid current is generated in the electrolytic solution 5 according to a flow of a gas bubble 6 as described above between electrodes, so that the electrolytic solution 5 flows from a bottom to a top of the reaction chamber 10 between the anode 3a and the cathode 2 and between the cathode 2 and the anode 3b.

Then, a downward liquid current is generated between an inner wall 8c of the reaction chamber 10 and the anode 3a and between an inner wall 8d of the reaction chamber 10 and the anode 3b according to an upward liquid current of the electrolytic solution 5, so that the electrolytic solution 5 flows from a top to a bottom of the reaction chamber 10. That is, the electrolytic solution 5 is circulated inside the reaction chamber 10 in a YZ-plane as illustrated in FIG. 1A.

Thus, the flow battery 100 according to embodiments quickly circulates the electrolytic solution 5 where a concentration of [Zn(OH)₄]²⁻ is locally decreased therein, so that it is possible to keep a uniform concentration of [Zn(OH)₄]²⁻ in the electrolytic solution 5 and it is possible to reduce conduction between the anodes 3a, 3b and the cathode 2 that is involved by growth of a dendrite.

Herein, a gap between the anode 3a and the diaphragm 4 and a gap between the anode 3b and the diaphragm 4 are preferably provided so as to be less than or equal to 1 cm. A gap between the anode 3a or 3b and the diaphragm 4 is less than or equal to 1 cm, so that it is possible to reduce a voltage drop that is involved by ion conduction between electrodes. Furthermore, it is possible to cause a gas bubble 6 to flow near the anodes 3a, 3b more reliably, so that it is possible to homogenize a concentration of [Zn(OH)₄]²⁻ in the electrolytic solution 5 quickly and it is possible to reduce conduction between the anode 3a and the cathode 2 and between the anode 3b and the cathode 2 that is involved by growth of a dendrite.

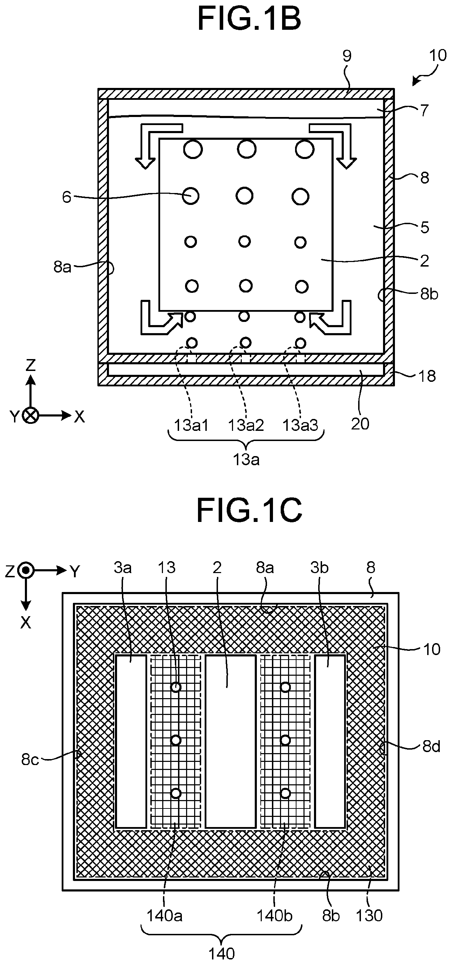

Although the electrolytic solution 5 that is circulated inside the reaction chamber 10 in a YZ-plane as illustrated in FIG. 1A is explained in embodiments as described above, a direction of circulating of a liquid current that is generated in the electrolytic solution 5 according to a flow of an gas bubble 6 is not limited to that as illustrated in FIG. 1A. This point will be explained by using FIG. 1B and FIG. 1C.

FIG. 1B is a diagram illustrating an outline of the case 22 that is included in the flow battery 100 according to embodiments and FIG. 1C is a diagram of a plan view of the bottom surface 8e of the flow battery 100 according to embodiments through the cathode 2 and the anodes 3a, 3b. Additionally, FIG. 1B omits illustration of members that correspond to the diaphragm 4 and the recovery port 14a as illustrated in FIG. 1A. Hereinafter, illustration and explanation of the diaphragm 4 will be omitted, unless otherwise noted.

FIG. 1B is a I-I cross-sectional view of the case 22 as illustrated in FIG. 1A. As illustrated in FIG. 1B, the first supply hole 13a that generates a gas bubble 6 that flows between the cathode 2 and the anode 3a is arranged in such a manner that three openings 13a1, 13a2, 13a3 are aligned in a direction of an X-axis. Furthermore, the first supply hole 13b that generates a gas bubble 6 that flows between the cathode 2 and the anode 3b also has a configuration that is similar to that of the first supply hole 13a. Additionally, in a case where the first supply holes 13a, 13b are explained without particular distinction, they may be described as a first supply hole(s) 13.

As described above, a gas bubble 6 flows so as to rise in the electrolytic solution 5 from a bottom to a top of the reaction chamber 10 between the anode 3a and the cathode 2 and between the cathode 2 and the anode 3b, respectively. An upward liquid current is generated in the electrolytic solution 5 according to such a flow of a gas bubble 6, so that the electrolytic solution 5 flows from a bottom to a top of the reaction chamber 10 between the anode 3a and the cathode 2 and between the cathode 2 and the anode 3b. Then, a downward liquid current is generated near an inner wall 8a and an inner wall 8b of the reaction chamber 10 according to an upward liquid current of the electrolytic solution 5, so that the electrolytic solution 5 flows from a top to a bottom of the reaction chamber 10. That is, the electrolytic solution 5 is circulated inside the reaction chamber 10 in a ZX-plane as illustrated in FIG. 1B.

Furthermore, FIG. 1C corresponds to a diagram of a plan view of an inside of the first case 8 as illustrated in FIG. 1A from a side of a positive direction of a Z-axis. In a plan view, regions between the cathode 2 and the anodes 3a, 3b are provided as a first region 140. The first region 140 is a region between electrodes. In a plan view, a region on the bottom surface 8e except the first region 140, a region that overlaps with the cathode 2, and regions that overlap with the anodes 3a, 3b is provided as a second region 130. The first supply hole 13a of a gas bubble generation device is arranged in a region 140a between the anode 3a and the cathode 2 and the first supply hole 13b is arranged in a region 140b between the cathode 2 and the anode 3b.

In the first region 140 that includes the regions 140a, 140b, an upward liquid current is generated in the electrolytic solution 5 according to an upward flow of a gas bubble 6 that is generated by a gas that is supplied from the first supply holes 13a, 13b to the electrolytic solution 5. On the other hand, in the second region 130 between an electrode region that includes the cathode 2, the anodes 3a, 3b, and the first region 140 and inner walls 8a, 8b, 8c, 8d of the first case 8, a downward liquid current that corresponds to an upward liquid current in the first region 140 is generated in the electrolytic solution 5. Thus, in the flow battery 100 according to embodiments, a gas bubble 6 is caused to flow between electrodes, so that it is possible to circulate the electrolytic solution 5 all over the reaction chamber 10. Accordingly, it is possible to reduce a local concentration decrease of [Zn(OH)₄]²⁻ near the anodes 3a, 3b, so that it is possible to reduce conduction between the anodes 3a, 3b and the cathode 2.

In the second region 130, none of the first supply holes 13 exists or the first supply holes 13 with a number per a surface area that is less than that in the first region 140 merely exist, so that it is possible to provide a flow of the electrolytic solution as described above.

A flow channel resistance of the second supply hole 17 may be less than or equal to 1/100, and further, 1/1000, of a flow channel resistance of the first supply hole 13. Thereby, a pressure loss of the second supply hole 17 is less than or equal to 1/100, and further, 1/1000, of a pressure loss of the first supply hole 13. Thereby, even in a case where pulsation or the like is caused in supply of a gas from the gas supply part 11, it is possible to generate gas bubbles 6 with a constant diameter from each of the first supply holes 13. Thereby, coalescence of gas bubbles 6 in a middle of rising thereof is difficult to occur and a flow of an upward liquid current is close to uniform one, so that it is possible to stabilize such a flow.

Furthermore, a flow channel resistance of the manifold 20 between two adjacent first supply holes 13 may be may further be 1/1000 of a flow channel resistance of the first supply hole 13. Thereby, a pressure loss of the manifold 20 is less than or equal to 1/100, and further, 1/1000, of a pressure loss of the first supply hole 13. Thereby, a difference between diameters of gas bubbles that are generated in the adjacent first supply holes 13 or amounts of a gas per unit time is decreased and a flow of an upward liquid current is close to uniform one, so that it is possible to stabilize such a flow.

The flow battery 100 is provided in a state where the manifold 20 is filled with a gas and a little electrolytic solution 5 exists therein, during an operation thereof, in particular, while the gas supply part 11 supplies a gas thereto. The first supply hole 13 is provided with a small cross-sectional area in such a manner that the electrolytic solution 5 does not fall in the manifold 20, by a surface tension of the electrolytic solution 5, even when the gas supply part 11 does not supply a gas thereto. However, a part of the electrolytic solution 5 may fall in the manifold 20 by being left to stand in a long term or applying a vibration or a pressure thereto.

Upper ends of the cathode 2 and the anodes 3a, 3b are preferably provided below a liquid level of the electrolytic solution 5 even in a case where the electrolytic solution 5 falls via the first supply hole 13, so as to fill an entirety of the manifold 20. Even in a state where the flow battery 100 is not operated, a difference in an electrode state between a part that is exposed to a gas in the gas layer 7 and a part that is provided in the electrolytic solution 5 may potentially be caused to influence a characteristic of the flow battery 100. Furthermore, during an operation, whereas a part that is provided in the electrolytic solution 5 causes expansion and contraction or the like by an entrance and an exit of an active material or the like, a part of an electrode that is exposed to a gas in the gas layer 7 does not cause such a matter and cracking or the like may potentially be caused at a boundary thereof. If upper ends of the cathode 2 and the anodes 3a, 3b are provided below a liquid level of the electrolytic solution 5, such a problem is difficult to occur even in a case where the electrolytic solution 5 falls in an entirety of the manifold 20.

Furthermore, as the gas layer 7 is lost from the reaction chamber 10 during an operation of the flow battery 100, a pressure for putting a gas from the first supply hole 13 into an inside of the reaction chamber 10 is increased, and hence, the gas layer 7 exists in the reaction chamber 10 even in a case where the manifold 20 is filled with a gas.

As the electrolytic solution 5 is put in the manifold 20 during an operation of the flow battery 100, such an electrolytic solution 5 is not used as a battery, so that a volume thereof is decreased by such an amount. Accordingly, the manifold 20 is substantially filled with a gas while the gas supply part 11 supplies such a gas thereto. Furthermore, as the electrolytic solution 5 exists therein, a flow channel resistance of the manifold 20 or the like is changed by such an amount, and hence, such a variation is preferably absent.

As a gas more than necessary is supplied to the electrolytic solution 5, a flow of the electrolytic solution 5 may be disturbed, and as a small amount thereof is provided, it is not possible to provide a sufficient flow thereof. In order to stabilize a flow of the electrolytic solution 5, 0.1 to 10 L of a gas per 1 L of a volume of the electrolytic solution 5 is preferably supplied for one minute. In a case where a gas is supplied at such a flow rate, if a height of the manifold 20 is large, the electrolytic solution 5 may remain in the manifold 20, and hence, a height of the manifold 20 is preferably less than or equal to 10 mm, and further, less than or equal to 5 mm. Furthermore, in order to decrease a flow channel resistance of the electrolytic solution 5, a height of the manifold 20 is preferably greater than or equal to 0.5 mm, and further, greater than or equal to 1 mm.

In the flow battery 100, it is possible to mix the powder 16 that includes zinc in the electrolytic solution 5. Thereby, as [Zn(OH)₄]²⁻ in the electrolytic solution 5 is consumed by charging, zinc in the powder 16 is dissolved so as to follow it, so that [Zn(OH)₄]²⁻ is supplied to the electrolytic solution 5. Accordingly, it is possible to keep a concentration of [Zn(OH)₄]²⁻ in the electrolytic solution 5 at a saturated state thereof, so that it is possible to reduce conduction between the anodes 3a, 3b and the cathode 2 that is involved by growth of a dendrite.

Additionally, for the powder 16, it is possible to provide metallic zinc, calcium zincate, zinc carbonate, zinc sulfate, zinc chloride, or the like, other than zinc oxide and zinc hydroxide, and zinc oxide and zinc hydroxide are preferable.

Furthermore, although Zn is consumed on the anodes 3a, 3b by charging so as to produce [Zn(OH)₄]²⁻, the electrolytic solution 5 is already provided in a saturated state thereof, so that ZnO is deposited from [Zn(OH)₄]²⁻ that is excessive in the electrolytic solution 5. Zinc that is herein consumed on the anodes 3a, 3b is zinc that is deposited on a surfaces of the anodes 3a, 3b at a time of charging. Accordingly, a so-called shape change where surface shapes of the anodes 3a, 3b are changed is not caused, differently from a case where charging and discharging are repeated by using an anode that originally contains a zinc species. Thereby, in the flow battery 100 according to embodiments, it is possible to reduce time degradation of the anodes 3a, 3b. Additionally, Zn(OH)₂ or a mixture of ZnO and Zn(OH)₂ is deposited from [Zn(OH)₄]²⁻ that is excessive, depending on a state of the electrolytic solution 5.

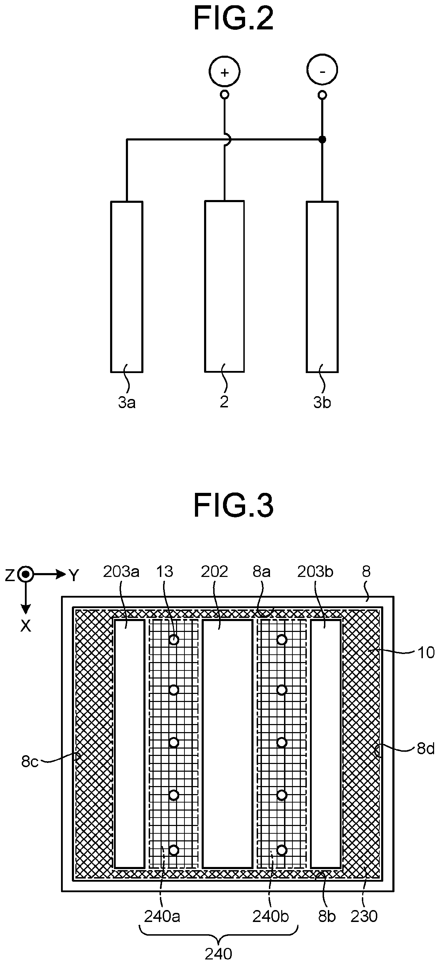

Next, connection between electrodes in the flow battery 100 will be explained. FIG. 2 is a diagram explaining an example of connection between electrodes in the flow battery 100 according to embodiments.

As illustrated in FIG. 2, the anode 3a and the anode 3b are connected in parallel. Thus, anodes are connected in parallel, so that it is possible to connect and use respective electrodes of the flow battery 100 appropriately even in a case where a total number of a cathode(s) and an anode(s) is different therefrom.

Furthermore, the flow battery 100 according to embodiments includes the anodes 3a, 3b that are arranged so as to interpose the cathode 2 therebetween and fact one another. Thus, a current density per one anode in the flow battery 100 where the two anodes 3a, 3b correspond to the one cathode 2 is decreased, as compared with that of a flow battery where an anode(s) correspond(s) to a cathode(s) on a one-to-one basis. Accordingly, in the flow battery 100 according to embodiments, production of a dendrite on the anodes 3a, 3b is further reduced, so that it is possible to further reduce conduction between the anodes 3a, 3b and the cathode 2.

Shapes of the cathode 2 and the anodes 3a, 3b may be changed from those of embodiments as described above so as to change a manner of circulation of the electrolytic solution 5. FIG. 3 is a diagram of a plan view of a reaction chamber of a flow battery according to Modification 1 of embodiments. FIG. 3 is a diagram that corresponds to FIG. 1C that is a plan view of a reaction chamber of a flow battery according to embodiments. A reaction chamber 10 as illustrated in FIG. 3 is identical to the reaction chamber 10 according to embodiments as illustrated in FIG. 1C as described above, except that a cathode 202 and anodes 203a, 203b with dimensions in a direction of an X-axis that are different from those of the cathode 2 and the anodes 3a, 3b are housed therein.

The cathode 202 and the anodes 203a, 203b extend to neighborhoods of the inner walls 8a, 8b of the first case 8. The cathode 202 and the anodes 203a, 203b may contact or be joined to the inner walls 8a, 8b of the first case 8.

The first supply holes 13 are arranged in a direction of a Y-axis in a first region 240 that is a region between electrodes. By such an arrangement, a gas bubble 6 causes an upward liquid current in the first region 240. Then, in a plan view, in a second region 230 except the first region 240, a region that overlaps with the cathode 202, and regions that overlap with the anodes 203a, 203b, a downward liquid current is caused in second regions 230 that are arranged at positive and negative ends in a first direction where the cathode 202 and the anodes 203a, 203b are aligned therein, that is, a direction of a Y-axis, with respect to the cathode 202 and the anodes 203a, 203b. A flow of the electrolytic solution 5 is revolved in a YZ-plane. In the second region 230, an upward liquid current is formed by a bubble that spreads from the first region 240 or a substantially stagnant condition is provided, in regions that are located at positive and negative ends in a direction of an X-axis. That is, the electrolytic solution 5 is not revolved in a ZX-plane. In a case of such a flow of the electrolytic solution 5, the flow is stabilized. If an upward liquid current is formed in regions that are located at positive and negative ends in a direction of an X-axis, in the second region 230, it is possible to increase a degree of stability of a flow of the electrolytic solution 5.

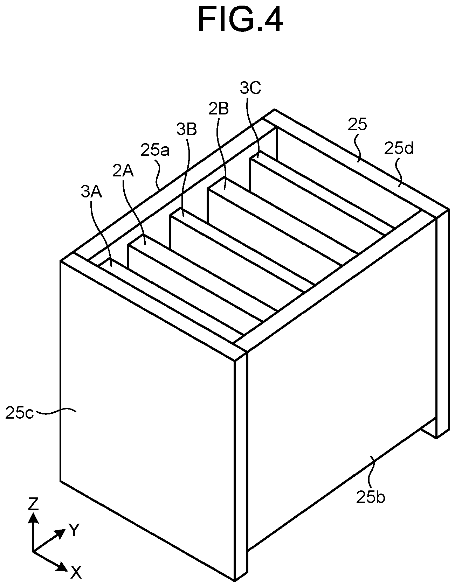

Although the flow battery 100 that includes the one cathode 2 or cathode 202 is explained in embodiments as described above and Modification 1, a plurality of cathodes may be included therein. Furthermore, in such a case, as a support frame where a plurality of electrodes are arranged thereon is housed in the reaction chamber 10, it is possible to readily replace an electrode. Hereinafter, a flow battery 100 that includes a support frame where a plurality of anodes and cathodes are arranged thereon will be explained by using FIG. 4 to FIG. 5D.

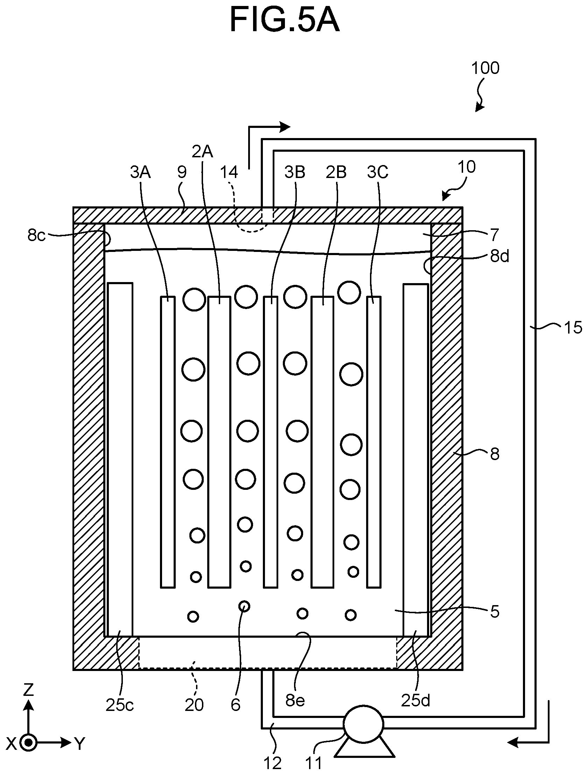

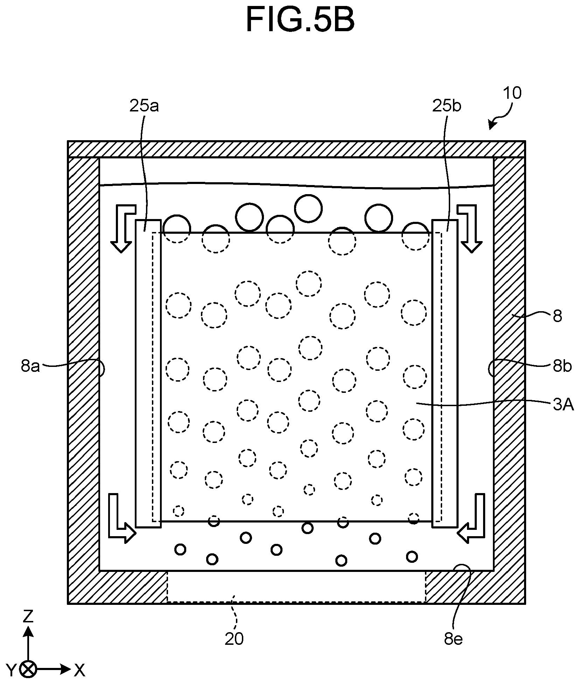

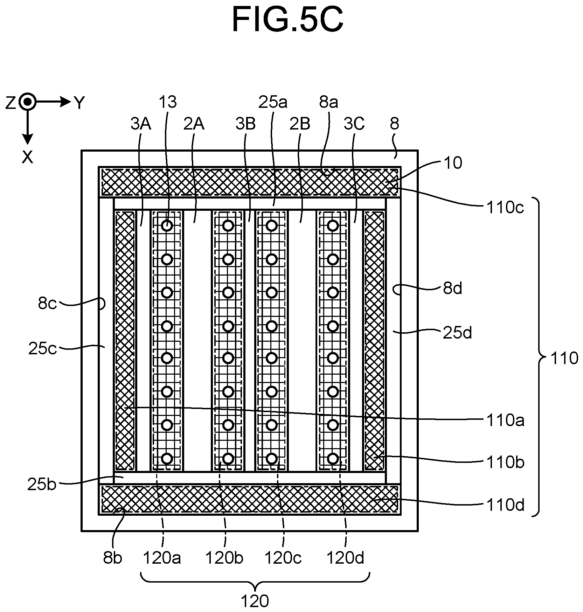

FIG. 4 is a diagram illustrating an outlie of a support frame that is included in a flow battery 100 according to Modification 2 of embodiments, FIG. 5A is a diagram illustrating an outline of the flow battery 100 according to Modification 2 of embodiments, and FIG. 5B is a diagram where a reaction chamber 10 that is included in the flow battery 100 as illustrated in FIG. 5A is viewed from a side of a negative direction of a Y-axis. Furthermore, FIG. 5C corresponds to a diagram where the reaction chamber 10 that is included in the flow battery 100 as illustrated in FIG. 5A is viewed from a side of a positive direction of a Z-axis.

First, a support frame will be explained. A support frame 25 is composed of frame bodies 25a to 25d with a plate shape. The support frame 25 includes a first frame body 25a and a second frame body 25b that each support cathodes 2A, 2B and anodes 3A, 3B, 3C so as to interpose side surfaces thereof from both sides thereof, and a third frame body 25c and a fourth frame body 25d that each support the first frame body 25a and the second frame body 25b so as to interpose side surfaces thereof from both sides thereof. The first frame body 25a and the second frame body 25b are configured in such a manner that lengths thereof in a direction of a Z-axis are less than those of the third frame body 25c and the fourth frame body 25d, so that it is possible for the electrolytic solution 5 to flow or pass between the first frame body 25a and the second frame body 25b and the bottom surface 8e of the first case 8 when being housed in the reaction chamber 10.

Furthermore, as illustrated in FIG. 5A, a plurality of electrodes are arranged in the reaction chamber 10 in order of the anode 3A, the cathode 2A, the anode 3B, the cathode 2B, and the anode 3C in a direction of a Y-axis in such a manner that cathodes and anodes are alternately provided. Furthermore, the flow battery 100 as illustrated in FIG. 5A includes a recovery port 14 instead of the recovery ports 14a, 14b and the branched flow channel 15a of the flow battery 100 as illustrated in FIG. 1A. Although the recovery port 14 is arranged so as to overlap with the manifold 20 when viewed from a direction of a Z-axis, this is not limiting and it may be arranged at any position as long as it is opened so as to face the gas layer 7. Furthermore, the recovery port 14 may be single or may be configured in such a manner that two or more recovery ports are arranged.

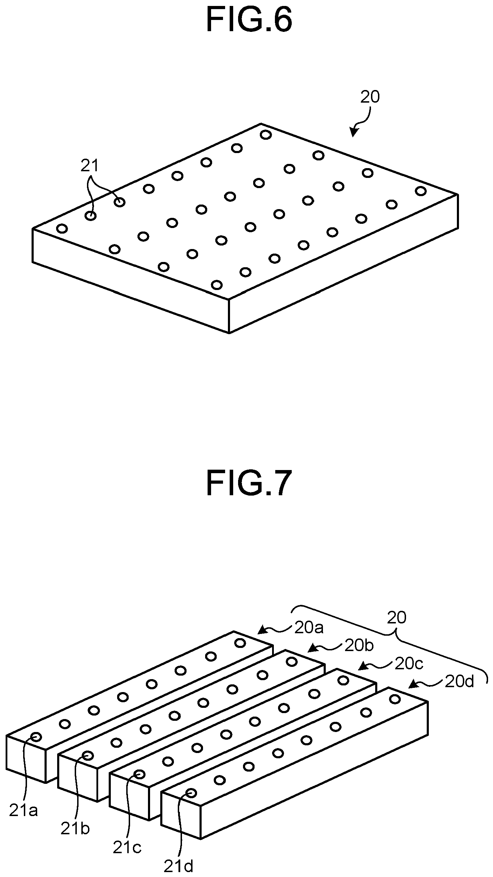

Herein, a configuration example of the manifold 20 will be explained by using FIG. 6. FIG. 6 is a diagram illustrating an outline of the manifold 20 that is included in the flow battery 100 according to Modification 2 of embodiments. The manifold 20 as illustrated in FIG. 6 has a plurality of first supply holes 21. The manifold 20 is arranged on bottom of the reaction chamber 10, more specifically, on the bottom surface 8e of the first case 8 that houses the electrolytic solution 5, or is embedded on a bottom of the reaction chamber 10. FIG. 5A illustrates a state where the manifold 20 is embedded in a bottom of the reaction chamber 10. As the manifold 20 is configured to be embedded in such a bottom, it is possible to downsize the flow battery 100.

The manifold 20 generates a gas bubble 6 in the electrolytic solution 5 from the first supply holes 21 based on a gas that is supplied from the gas supply part 11 via the supply flow channel 12. The first supply holes 21 may be provided in any arrangement as long as it is possible to cause a generated gas bubble 6 to appropriately flow between the anode 3A and the cathode 2A, between the cathode 2A and the anode 3B, between the anode 3B and the cathode 2B, and between the cathode 2B and the anode 3C, respectively.

The manifold 20 is not limited to a single one and may be composed of, for example, a plurality of manifolds 20a to 20d as illustrated in FIG. 7. In such a case, a configuration may be provided in such a manner that sizes or shapes of first supply holes 21a to 21d are changed depending on a width between electrodes where a gas bubble 6 flows therebetween.

By returning to FIG. 5A to FIG. 5C, circulation of the electrolytic solution 5 that is involved by a flow of a gas bubble 6 will further be explained. As described above, a gas bubble 6 that is generated by supply of a gas from the manifold 20 flows upward between electrodes. Accordingly, in FIG. 5C, an upward liquid current where the electrolytic solution 5 flows from a bottom to a top of the reaction chamber 10 is generated in the electrolytic solution 5 between electrodes, in a first region 120 that is regions between the cathodes 2A, 2B and the anodes 3A, 3B, 3C, in detail, a region 120a between the anode 3A and the cathode 2A, a region 120b between the cathode 2A and the anode 3B, a region 120c between the anode 3B and the cathode 2B, and a region 120d between the cathode 2B and the anode 3C.

The electrolytic solution 5 that flows to a top of the reaction chamber 10 in the first region 120 flows in horizontal directions toward the third frame body 25c and the fourth frame body 25d so as to pass over the anode 3A and the anode 3c, respectively. Then, in a plan view, in a second region 110 except the first region 120, regions that overlap with the cathodes 2A, 2B, regions that overlap with the anodes 3A, 3B, 3C, and regions that overlap with the frame bodies 25a to 25d, a downward liquid current that corresponds to an upward liquid current in the first region 120 that is a region between electrodes is generated in the electrolytic solution 5 in a region 110a between the anode 3A and the third frame body 25c and a region 110b between the anode 3C and the fourth frame body 25d.

Furthermore, the electrolytic solution 5 that flows to a top of the reaction chamber 10 in the first region 120 flows in horizontal directions toward the inner walls 8a, 8b of the first case 8 so as to pass over the first frame body 25a and the second frame body 25b, respectively. Then, in the second region 110, a downward liquid current that corresponds to an upward liquid current in the first region 120 is generated in the electrolytic solution 5 in a region 110c between the first frame body 25a and the inner wall 8a of the first case 8 and a region 110d between the second frame body 25b and the inner wall 8b of the first case 8. Thus, in the flow battery 100 according to Modification 2 of embodiments, a gas bubble 6 is caused to flow between electrodes, so that it is possible to circulate the electrolytic solution 5 all over the reaction chamber 10. Accordingly, it is possible to reduce a local concentration decrease of [Zn(OH)₄]²⁻ near the anodes 3A, 3B, 3C, so that it is possible to reduce conduction between the anodes 3A, 3B and the cathode 2A and between the anodes 3B, 3C and the cathode 2B, respectively.

In a case where 2n+1 electrode plates (where n is an integer that is greater than or equal to 1) are aligned in a first direction, a lower end of a central electrode plate that is an n+1-th electrode plate that is arranged in the first direction may be arranged below a lower end of another electrode plate. In such a case, a central electrode plate is put at a center in a YZ-plane where clockwise revolution of the electrolytic solution 5 is caused on a right side of the central electrode plate and counterclockwise revolution of the electrolytic solution 5 is caused on a left side of the central electrode plate, so that each of such flows of the electrolytic solution 5 is stabilized.

A difference between thicknesses of the anodes 3A, 3B and the cathode 2A or the anodes 3B, 3C and the cathode 2B may be provided depending on presence or absence of an active material, which the diaphragm 4 is attached to, or the like. In such a case, a central electrode plate may be a thin electrode plate with a small thickness. In such a case, such a thickness is small, so that clockwise and counterclockwise flows as described above are further stabilized.

Even in such a case, positions or heights of upper ends of electrode plates are preferably identical in order to smooth a flow of the electrolytic solution 5 so as to pass over such electrode plates.

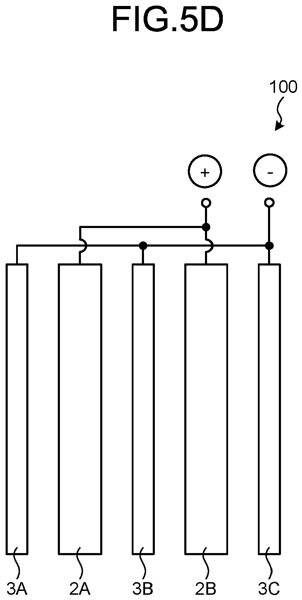

Next, connection between electrodes in the flow battery 100 will be explained. FIG. 5D is a diagram explaining an example of connection between electrodes of the flow battery 100 according to Modification 2 of embodiments.

As illustrated in FIG. 5D, the anode 3A, the anode 3B, and the anode 3C are connected in parallel. Furthermore, the cathode 2A and the cathode 2B are connected in parallel. Thus, anodes and cathodes are respectively connected in parallel, so that it is possible to appropriately connect and use respective electrodes of the flow battery 100 where total numbers of anodes and cathodes are respectively different.

Additionally, although total 5 electrodes in embodiments as described above are configured in such a manner that anodes and cathodes are arranged alternately, this is not limiting and 5 or more electrodes may be arranged alternately or each of a cathode and an anode may be arranged singly. Furthermore, although embodiments as described above are configured in such a manner that both ends are anodes (3A, 3C), this is not limiting and a configuration may be provided in such a manner that both ends are cathodes.

Moreover, an equal number of anodes and cathodes may be respectively arranged alternately in such a manner that one is a cathode and the other is an anode.

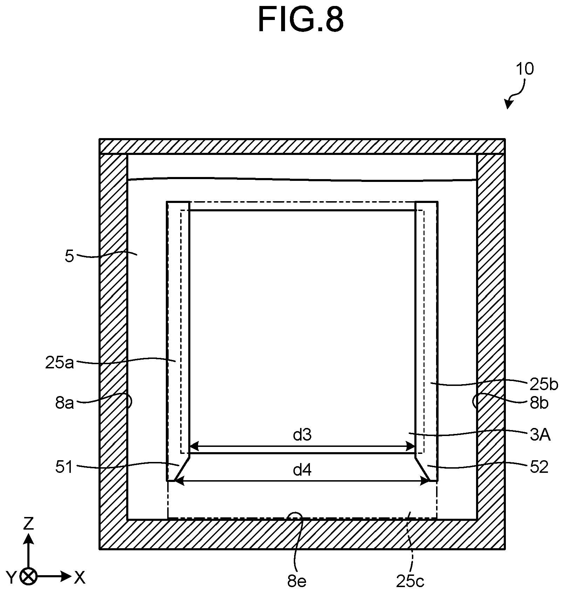

FIG. 8 is a diagram illustrating an outline of a reaction chamber 10 that is included in a flow battery 100 according to Modification 3 of embodiments. A reaction chamber 10 as illustrated in FIG. 8 has a configuration that is similar to that of the reaction chamber 10 as illustrated in FIG. 5B except that a first frame body 25a and a second frame body 25b have lower end parts 51, 52 with a cutout shape, respectively. The first frame body 25a and the second frame body 25b have the lower end parts 51, 52 with a cutout shape, respectively, so that a gap d4 between the first frame body 25a and the second frame body 25b in lower end surfaces of the first frame body 25a and the second frame body 25b is greater than a distance d3 between the first frame body 25a and the second frame body 25b.

As the first frame body 25a and the second frame body 25b that have such a configuration are applied thereto, a gas bubble 6 and the electrolytic solution 5 that flow near the first frame body 25a and the second frame body 25b readily flow into the first region 120 (see FIG. 5C) that is a region between electrodes between the first frame body 25a and the second frame body 25b, and the electrolytic solution 5 in the first region 120 is circulated quickly, so that it is possible to reduce conduction between an anode and a cathode that is involved by growth of a dendrite.

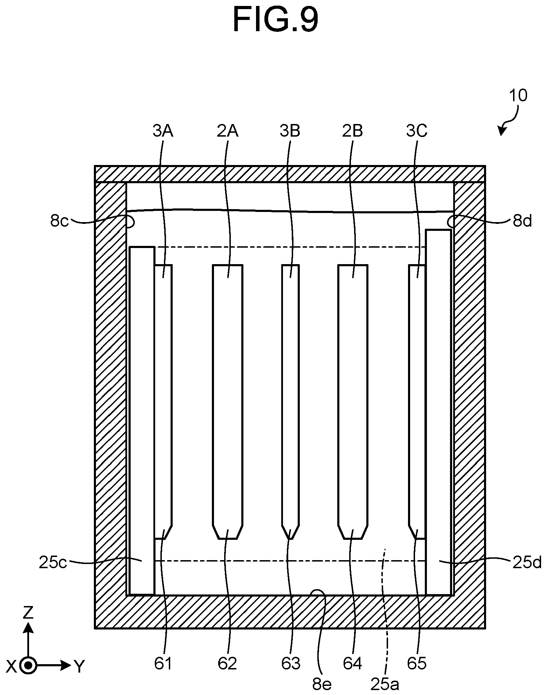

FIG. 9 is a diagram illustrating an outline of a reaction chamber 10 that is included in the flow battery 100 according to Modification 3 of embodiments. A reaction chamber 10 as illustrated in FIG. 9 has a configuration that is similar to that of the reaction chamber 10 that is included in the flow battery 100 as illustrated in FIG. 5A except that an anode 3A, a cathode 2A, an anode 3B, a cathode 2B, and an anode 3C have lower end parts 61 to 65 with a cutout shape, respectively. The anode 3A, the cathode 2A, the anode 3B, the cathode 2B, and the anode 3C have the lower end parts 61 to 65 with a cutout shape, respectively, so that a gap between lower end surfaces of a cathode and an anode that are adjacent thereto is greater than a distance between the cathode and the anode that are adjacent thereto.

As the anode 3A, the cathode 2A, the anode 3B, the cathode 2B, and the anode 3C that have such a configuration are applied thereto, a gas bubble 6 and the electrolytic solution 5 that flow near the anode 3A, the cathode 2A, the anode 3B, the cathode 2B, and the anode 3C readily flow into the first region 120 (see FIG. 5C), and the electrolytic solution 5 in the first region 120 is circulated quickly, so that it is possible to reduce conduction between an anode and a cathode that is involved by growth of a dendrite.

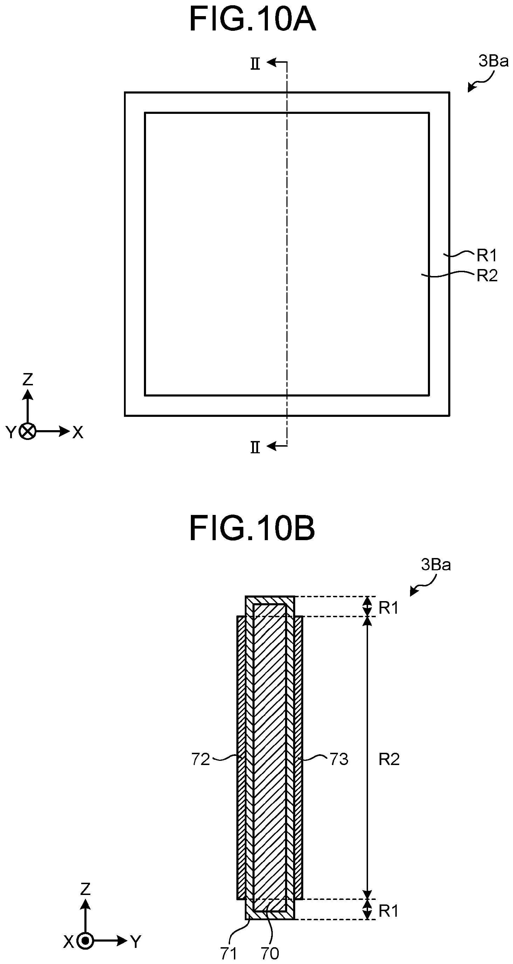

Although the anodes 3a, 3b, or the anodes 3A to 3C that are provided by uniformly plating-processing metal plates or metal surfaces are explained in embodiments and modifications as described above, this is not limiting. Hereinafter, this point will be explained by using FIG. 10A to FIG. 11B.

FIG. 10A is a diagram illustrating an outline of an anode 3Ba that is included in a flow battery 100 according to Modification 4 of embodiments and FIG. 10B is a II-II cross-sectional view of the anode 3Ba as illustrated in FIG. 10A.

It is possible to apply the anode 3Ba thereto, for example, instead of the anode 3B as illustrated in FIG. 5A. The anode 3Ba includes a first region R1 that constitutes an edge part of the anode 3Ba when viewed from the cathode 2A in a direction of a Y-axis and a second region R2 that is surrounded by the first region R1. Furthermore, the anode 3Ba includes a metal layer 70, a first covering layer 71 that covers an entirety of the metal layer 70, and second covering layers 72, 73 that cover a part of the first covering layer 71 so as to correspond to the second region R2.

The metal layer 70 is composed of, for example, a metal such as copper or stainless steel. Furthermore, the first covering layer 71 is, for example, a plated layer that contains nickel. Then, the second covering layers 72, 73 are, for example, covering layers that are plated or applied so as to contain metallic zinc, zinc oxide, or another zinc compound.

For the flow battery 100 that contains zinc in the electrolytic solution 5, it is known that an electrode surface is zinc-plating-processed in order to smoothly promote a battery reaction on an anode at a time of charging thereof. On the other hand, for example, on the anode 3B with a flat-plate shape, a current is concentrated at, for example, an edge part or a corner part thereof, so that deposition of zinc that is capable of being a factor of a dendrite is readily caused. Accordingly, the anode 3Ba as illustrated in FIG. 10A and FIG. 10B intentionally contains no zinc in the first region R1 that is an edge part or a corner part thereof.

Thus, the anode 3B that is configured to include the second region R2 that is surrounded by the first region R1 where the first covering layer 71 on an electrode surface that faces a cathode is exposed therein and that includes the second covering layers 72, 73 on the first covering layer 71 is applied thereto, and the second covering layers 72, 73 in the second region R2 that is an essential part of the anode 3B contain zinc, so that a battery reaction is caused smoothly. On the other hand, zinc is not contained in the first region R1 where a dendrite tends to be readily produced by current concentration, so that deposition of zinc at a time of charging is reduced. Therefore, in the flow battery 100 that includes the anode 3Ba that has such a configuration, it is possible to reduce conduction between an anode and a cathode.

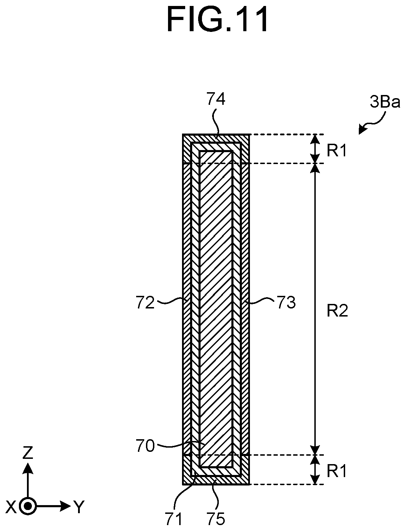

Although the first region R1 of the anode 3Ba that has a configuration in such a manner that the first covering layer 71 is exposed is explained in embodiments as described above, this is not limiting. FIG. 11 is a diagram illustrating an outlie of an anode that is included in a flow battery 100 according to Modification 5 of embodiments. An anode 3Ba as illustrated in FIG. 11 has a configuration that is identical to that of the anode 3Ba as illustrated in FIG. 10A and FIG. 10B except that a first region R1 has resin covering layers 74, 75 that cover the first covering layer 71.

The resin covering layers 74, 75 are composed of, for example, a resin material that has an alkali resistance and an insulation property, such as a silicone resin or polytetrafluoroethylene. As it has the resin covering layers 74, 75 that have such a configuration, a surface of the anode 3Ba as illustrated in FIG. 11 in the first region R1 does not have an electrical conductivity, so that deposition of zinc at a time of charging in the first region R1 is further reduced. Furthermore, an entire surface of the metal layer 70 is covered by a plurality of covering layers, so that degradation of the anode 3Ba that is involved by contacting the electrolytic solution 5 is reduced.

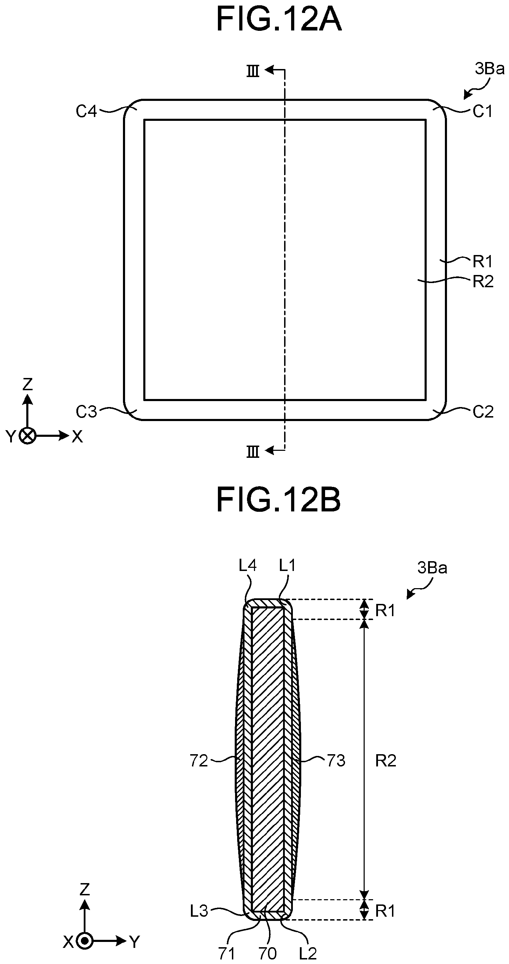

Furthermore, as described above, zinc is readily deposited at an edge part or a corner part of the anode 3Ba by current concentration at a time of charging. Accordingly, a configuration may be provided in such a manner that an edge part or a corner part of the anode 3Ba is rounded, for example, as illustrated in FIG. 12A to FIG. 13.

FIG. 12A is a diagram illustrating an outline of an anode 3Ba that is included in a flow battery 100 according to Modification 6 of embodiments and FIG. 12B is a III-III cross-sectional view of FIG. 12A.

An anode 3Ba as illustrated in FIG. 12A and FIG. 12B is different from the anode 3Ba as illustrated in FIG. 10A and FIG. 10B in that a first covering layer 71 is provided that is configured in such a manner that all of total 8 corner parts that include corner parts C1, C2, C3, and C4 as illustrated in FIG. 12A and total 8 ridge lines that include ridge lines L1, L2, L3, and L4 as illustrated in FIG. 12B are provided in round-chamfered shapes. Thus, all of corner parts and ridge lines of the anode 3Ba are provided in round-chamfered shapes, so that it is possible to further reduce deposition of zinc that is involved by current concentration at a time of charging.

Furthermore, for the second covering layers 72, 73 that cover the second region R2 as illustrated in FIG. 12B, a gentle slope may also be provided on thicknesses of the second covering layers 72, 73 in such a manner that a step is not provided at a boundary part between the first region R1 and the second region R2. By such a configuration, it is possible to further reduce deposition of zinc that is involved by current concentration at a boundary part between the first region R1 and the second region R2.

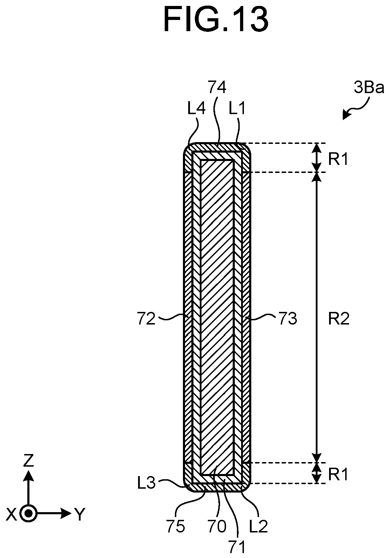

FIG. 13 is a diagram illustrating an outline of an anode that is included in a flow battery according to Modification 7 of embodiments. An anode 3Ba as illustrated in FIG. 13 is different from the anode 3Ba as illustrated in FIG. 11 in that resin covering layers 74, 75 are provided that are configured in such a manner that all of total 8 corner parts that constitute the anode 3Ba as illustrated in FIG. 11 and total 8 ridge lines that include ridge lines L1, L2, L3, and L4 as illustrated in FIG. 13 are provided in round-chamfered shapes. Thus, all of corner parts and ridge lines of the anode 3Ba are provided in round-chamfered shapes, so that it is possible to further reduce deposition of zinc that is involved by current concentration at a time of charging.

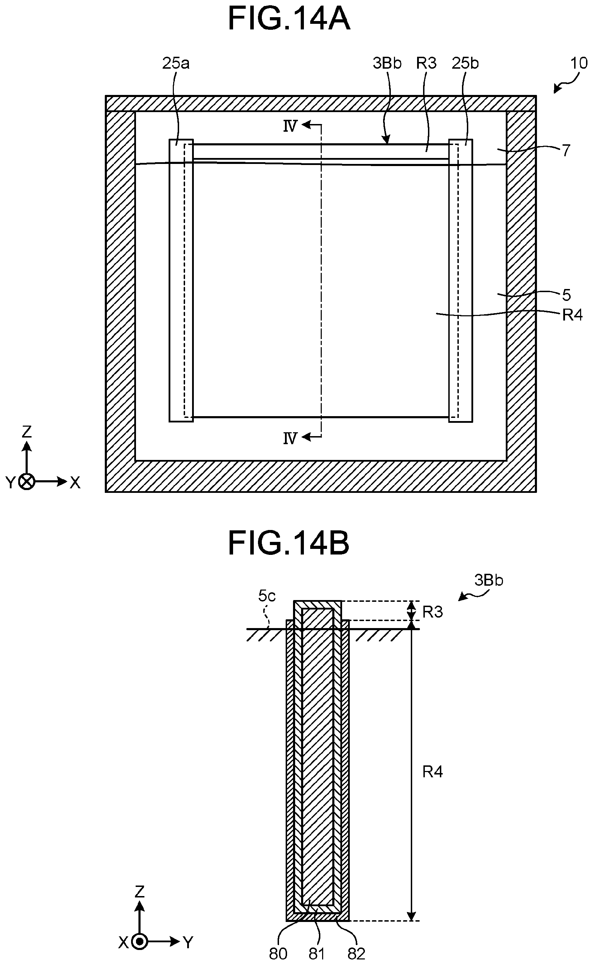

Although an example where an entire electrode is dipped and used in the electrolytic solution 5 is explained in embodiments and modifications as described above, this is not limiting and use thereof may be executed in a state where a top of an electrode is exposed to the gas layer 7. Such a point will be explained by using FIG. 14A and FIG. 14B.

FIG. 14A is a diagram illustrating an outline of a reaction chamber 10 that is included in a flow battery 100 according to Modification 8 of embodiments and FIG. 14B is a IV-IV cross-sectional view of FIG. 14A. It is possible to apply an anode 3Bb as illustrated in FIG. 14A thereto, instead of the anodes 3A, 3B, 3C as illustrated in FIG. 5A to FIG. 5C.

The anode 3Bb as illustrated in FIG. 14A and FIG. 14B includes a third region R3 that is exposed to the gas layer 7 that is provided on a liquid level 5a of the electrolytic solution 5 and a fourth region R4 that is adjacent to the third region R3. Furthermore, the anode 3B includes a metal layer 80, a first covering layer 81 that covers an entirety of the metal layer 80, and a second covering layer 82 that covers a part of the first covering layer 81 so as to correspond to the fourth region R4.

The metal layer 80 is composed of, for example, a metal such as copper or a stainless steel. Furthermore, the first covering layer 81 is, for example, a plated layer that contains nickel. Then, the second covering layer 82 is, for example, a covering layer that is plated or applied so as to contain metallic zinc, zinc oxide, or another zinc compound.

A gas bubble 6 that flows in the electrolytic solution 5 disappears at a liquid level 5c of the electrolytic solution 5. A part of droplets that are produced herein is attached to the anode 3Bb that is exposed to the gas layer 7. Herein, as the anode 3B where a droplet of the electrolytic solution 5 is attached thereto includes zinc, a crystal of zinc oxide is readily deposited thereon. As zinc oxide is deposited on the anode 3Bb that is exposed to the gas layer 7, a concentration of zinc in the electrolytic solution 5 is decreased irreversibly, so that a battery performance is deceased. Accordingly, the second covering layer 82 that contains zinc in the third region R3 that is exposed to the gas layer 7 is not provided.

Thus, the third region R3 where the first covering layer 81 on an electrode surface that faces a cathode is exposed therein is exposed to the gas layer 7, so that deposition of zinc that originates from the electrolytic solution 5 is reduced. Therefore, in the flow battery 100 that includes the anode 3Bb that has such a configuration, it is possible to reduce degradation of a battery performance.

Additionally, although the third region R3 that is exposed to the gas layer 7 over an entirety thereof is explained in embodiments as described above, this is not limiting and it is sufficient that at least a part of the third region R3 is exposed to the gas layer 7.

Furthermore, although the anode 3Bb that is capable of being applied thereto instead of the anode 3B as illustrated in FIG. 5A is explained in embodiments as described above, this is not limiting and a configuration may be provided so as to execute application thereof, for example, instead of the anodes 3A, 3C, the anodes 3a, 3b as illustrated in FIG. 1A to FIG. 2, or the anodes 203a, 203b as illustrated in FIG. 3. In such a case, the second covering layers 72, 73 that cover the second region R2 or the second covering layer 82 that covers the fourth region R4 may be configured so as to be arranged on only a surface that faces a cathode.

Although respective embodiments of the present invention are explained above, the present invention is not limited to respective embodiments and modifications as described above and various modifications are allowed unless it departs from a spirit thereof.

Although the powder 16 that is mixed in the electrolytic solution 5 is explained in embodiments as described above, this is not limiting and it may have no powder 16. Herein, a zinc component that is dissolved in the electrolytic solution 5 may be provided in a saturated state thereof or may be provided with a concentration that is less than that of a saturated state thereof. Moreover, the electrolytic solution 5 may be provided in such a manner that a zinc component is dissolved so as to provide a supersaturated state thereof.

Furthermore, although the diaphragm 4 that covers a cathode is explained in embodiments as described above, this is not limiting and it is sufficient that it is arranged between a cathode and an anode. Furthermore, the diaphragm 4 may be arranged so as to interpose both sides of such a cathode in a direction of a thickness thereof.

Furthermore, although the gas supply part 11 may always be operated, a supply rate of a gas at a time of discharging may be decreased, relative to that at a time of charging, from a viewpoint of reduction of a power consumption.

Additional effects or modifications can readily be derived by a person(s) skilled in the art. Hence, a broader aspect of the present invention is not limited to specific details and representative embodiments as illustrated and described above. Therefore, it is possible to execute various modifications without departing from a spirit or a scope of a general inventive concept as defined by the appended claims and equivalents thereof.

### Reference Signs List

- 2, 2A, 2B: cathode
- 3, 3a, 3b, 3A, 3B, 3C: anode
- 4: diaphragm
- 5: electrolytic solution
- 6: gas bubble
- 7: gas layer
- 8: first case
- 8e: bottom surface
- 9: top plate
- 10: reaction chamber
- 11: gas supply part
- 13: first supply hole
- 16: powder
- 17: second supply hole
- 18: second case
- 20: manifold
- 100: flow battery

## Claims

1. A flow battery, comprising:
a cathode;
an anode;
a reaction chamber that houses the cathode and the anode;
an electrolytic solution that is housed inside the reaction chamber and contacts the cathode and the anode;
a manifold that is arranged under the reaction chamber;
a plurality of first supply holes that connect the reaction chamber and the manifold; and
a gas supply part that supplies a gas to the manifold, wherein
when the electrolytic solution that is housed in the reaction chamber moves to the manifold so that the manifold is filled with the electrolytic solution, the cathode and the anode are not exposed to an outside of the electrolytic solution, and
when the manifold is filled with a gas, a gas layer that is not filled with the electrolytic solution exists in the reaction chamber.

2. The flow battery according to claim 1, wherein a flow channel resistance of a second supply hole that is provided on the manifold and is connected to the gas supply part is less than or equal to 1/100 of a flow channel resistance of the first supply hole.

3. A flow battery, comprising:
a cathode;
an anode;
a reaction chamber that houses the cathode and the anode;
an electrolytic solution that is housed inside the reaction chamber and contacts the cathode and the anode;
a manifold that is arranged under the reaction chamber;
a plurality of first supply holes that connect the reaction chamber and the manifold; and
a gas supply part that supplies a gas to the manifold, wherein
a flow channel resistance of a second supply hole that is provided on the manifold and is connected to the gas supply part is less than or equal to 1/100 of a flow channel resistance of the first supply hole.

4. The flow battery according to any one of claims 1 to 3, wherein a flow channel resistance of the manifold between the two first supply holes that are arranged adjacently is less than or equal to 1/100 of a flow channel resistance of the first supply hole.

5. A flow battery, comprising:
a cathode;
an anode;
a reaction chamber that houses the cathode and the anode;
an electrolytic solution that is housed inside the reaction chamber and contacts the cathode and the anode;
a manifold that is arranged under the reaction chamber;
a plurality of first supply holes that connect the reaction chamber and the manifold; and
a gas supply part that supplies a gas to the manifold, wherein
a flow channel resistance of the manifold between the two first supply holes that are arranged adjacently is less than or equal to 1/100 of a flow channel resistance of the first supply hole.

6. The flow battery according to any one of claims 1 to 5, wherein a height of the manifold is less than or equal to 10 mm.

7. A flow battery, comprising:
a cathode;
an anode;
a reaction chamber that houses the cathode and the anode;
an electrolytic solution that is housed inside the reaction chamber and contacts the cathode and the anode;
a manifold that is arranged under the reaction chamber;
a plurality of first supply holes that connect the reaction chamber and the manifold; and
a gas supply part that supplies a gas to the manifold, wherein
a height of the manifold is less than or equal to 10 mm.

8. The flow battery according to any one of claims 1 to 7, wherein:
the cathode is a cathode plate with a plate shape;
the anode is an anode plate with a plate shape;
the cathode plate and the anode plate are alternately arranged in a first direction and the anode plate is arranged at ends on both sides in the firs direction;
a plan view of the reaction chamber through the cathode plate and the anode plate that are aligned therein includes a first region that is interposed between the one cathode plate and the one anode plate that is arranged to be adjacent to the cathode plate and a second region except the first region, a region that overlaps with the cathode plate, and a region that overlaps with the anode plate;
the first supply holes are arranged on a bottom surface that is a lower surface of the reaction chamber, in the first region, and
none of the first supply holes is arranged or the first supply holes are arranged at a rate that is less than that in the first region, on the bottom surface, in the second region.

9. The flow battery according to claim 8, wherein, among 2n+1 electrode plates that are aligned in the first direction and that include the cathode plate and the anode plate (where n is an integer that is greater than or equal to 1), a lower end of a central electrode plate that is the n-th electrode plate that is arranged in the first direction is arranged below a lower end of the other electrode plate.

10. The flow battery according to claim 9, wherein upper ends of the electrode plates are arranged at identical heights.

11. The flow battery according to any one of claims 8 to 10, wherein, among 2n+1 electrode plates that are aligned in the first direction and that include the cathode plate and the anode plate (where n is an integer that is greater than or equal to 1), a central electrode plate that is the n+1-th electrode plate that is arranged in the first direction is a thin electrode plate with a less thickness among the cathode plate and the anode plate.

12. The flow battery according to claim 11, wherein the thin electrode plate is the anode plate.
